# EUROPÄISCHE PATENTSCHRIFT

(11) **EP 2 272 715 B1**
(45) Veröffentlichungstag und Bekanntmachung des Hinweises auf die Patenterteilung: **15.04.2020**
(21) Anmeldenummer: 10007003.6
(22) Anmeldetag: 07.07.2010
(51) Int. Cl.: B60Q 1/26, B60Q 1/00, B66F 17/00

(54) **Mobile Arbeitsmaschine mit Beleuchtung**
Mobile work machine with lighting
Machine de travail mobile dotée d'un éclairage

(30) Priorität: 09.07.2009 DE 102009032471
(43) Veröffentlichungstag der Anmeldung: 12.01.2011
(73) Patentinhaber: STILL GmbH, 22113 Hamburg (DE)
(72) Erfinder: Bavendiek, Rainer, Dr., 21465 Wentorf (DE); Arndt, Michael, 22457 Hamburg (DE)
(74) Vertreter: Patentship Patentanwaltsgesellschaft mbH

(56) Entgegenhaltungen:
- EP-A1- 1 691 131
- CN-Y- 201 344 435
- JP-A- 10 273 292
- JP-A- 2002 087 155
- JP-A- 2006 137 228
- JP-A- 2006 290 186
- US-A- 6 095 663
- US-A1- 2003 002 292
- US-A1- 2005 254 240
- US-A1- 2006 083 012
- US-A1- 2008 062 708

## Beschreibung

Die Erfindung betrifft eine mobile Arbeitsmaschine mit Beleuchtung durch Leuchteinheiten, wobei die Leuchteinheiten LED sind und in einer Mehrzahl in Linien und/oder Flächenbereichen in die Außenkontur der mobilen Arbeitsmaschine integriert sind, um Positionssicherheitsleuchten zu bilden.

Mobile Arbeitsmaschinen bewegen sich häufig in Bereichen, in denen auch Personen arbeiten. In Bereichen, in denen sich helle und dunkle Abschnitte abwechseln, etwa in Hallen, Lagern und in Bereichen von Toren beim Übergang von Außenbereichen in Innenbereiche können diese oftmals aufgrund von Helligkeitsänderungen und starken Kontrasten nicht optimal gesehen werden. Hinzu kommt, dass insbesondere elektrisch angetriebene mobile Arbeitsmaschinen im Geräuschniveau so leise sind, dass deren Herannahen von im Gefahrenbereich befindlichen Personen nicht mehr durch die Geräuschentwicklung wahrgenommen werden kann und somit der optischen Erkennung erhöhte Bedeutung zukommt.

Es ist bekannt, mobile Arbeitsmaschinen, insbesondere Flurförderzeuge, mit einer Beleuchtung auszustatten, bei der Glühlampen Verwendung finden. Zum einen erfolgt dies, um Positionssicherheitsleuchten zu bilden, um den Zulassungsvorschriften, etwa der StVZO, soweit dies erforderlich ist, zu entsprechen und zum anderen, um sogenannte Arbeitsscheinwerfer zur Verfügung zu stellen, die den Bereich ausleuchten sollen, der befahren oder in dem mit der mobilen Arbeitsmaschine gearbeitet werden soll. Beispielsweise, wenn mit einem Flurförderzeug ein Einstapeln in ein Regal erfolgen soll.

Nachteilig an diesem Stand der Technik ist, dass insbesondere bei batteriebetriebenen Arbeitsmaschinen der Energieverbrauch sehr hoch ist. Die Beleuchtung muss von einer die mobile Arbeitsmaschine bedienenden Person eingeschaltet werden, da ein andauernder Betrieb durch den hohen Stromverbrauch nicht möglich ist. Die hohe Verlustleistung in Form von Wärmeabstrahlung führt zu einer großen Erhitzung der Beleuchtung und somit einer Verletzungsgefahr bei Berührung. Auch sind die Lampen der Beleuchtung oftmals aufgrund ihrer Größe und der entstehenden Wärmeabstrahlung außen separat an der mobilen Arbeitsmaschine befestigt, wodurch eine erhöhte Gefahr besteht, dass diese während des Betriebes beschädigt werden. Aufgrund der geringen Lebensdauer der Glühlampen müssen diese häufig gewechselt werden und es entsteht ein entsprechender Wartungsbedarf.

Aus der DE 197 17 827 A1 ist eine Warnblinkeinrichtung für die Ladebordwand von LKWs bekannt, die als Lichtquelle LED benutzt, die in glasklarem Kunststoff, vorzugsweise einen Stab von 8 mm Durchmesser und 400 mm Länge eingeschmolzen sind. Die Warnblinkeinrichtung ist an der aufklappenden Kante der Ladebordwand angeordnet.

Aus der US 6,095,663 A ist ein Sattelzug mit einem Sattelauflieger bekannt, bei dem an den Ecken des Sattelaufliegers LED-Positionsleuchten angebracht sind. Die LED-Positionsleuchten haben ein eigenes Gehäuse, in dem diese auf einer Leiterplatte angebracht sind, und sind mit diesem Gehäuse außen auf die Außenhaut des Sattelaufliegers aufgesetzt.

Aus der US 2006/083102 A ist ein Sattelzug mit einem Sattelauflieger bekannt, bei dem stromführende Schienen mit elektrischen Kontakten vorgesehen sind, die an dem Sattelauflieger oder der Kabine der Zugmaschine befestigt sind, und in die LED eingerastet werden können.

Die JP 10 273292 A offenbart einen Gabelstapler, bei dem auf die hinteren Streben eines Fahrerschutzdaches Kombinationsleuchten hervorstehend aufgesetzt sind.

Die US 2008/062708 A1 offenbart einen Sattelzug mit einem Sattelauflieger, wobei der Sattelauflieger an der Außenseite mit integrierten LED-Leuchteinheiten versehen ist.

Aus der JP 2006 290186 A ist eine als Radlader ausgebildete mobile Arbeitsmaschine mit einem angebauten Schneeräumschild bekannt. Das Schneeräumschild ist mit integrierten LED-Leuchteinheiten versehen.

Der vorliegenden Erfindung liegt die Aufgabe zugrunde, eine mobile Arbeitsmaschine zur Verfügung zu stellen, die auch unter ungünstigen Lichtverhältnissen gut erkennbar ist.

Die Aufgabe wird erfindungsgemäß durch eine mobile Arbeitsmaschine mit den Merkmalen des Anspruchs 1 gelöst. Vorteilhafte Weiterbildungen werden in den Unteransprüchen angegeben.

Die Aufgabe wird durch eine mobile Arbeitsmaschine nach Anspruch 1 gelöst, bei der eine Beleuchtung durch Leuchteinheiten erfolgt, die LED sind und in einer Mehrzahl in Linien und/oder Flächenbereichen in die Außenkontur der mobilen Arbeitsmaschine integriert sind, um Positionssicherheitsleuchten zu bilden. Die mobile Arbeitsmaschine ist ein batterie-elektrisch betriebenes Flurförderzeug und die LED sind beim Betrieb der mobilen Arbeitsmaschine durchgehend eingeschaltet.

Die LED können hierbei einzeln oder auch in Gruppen in beliebiger, an die Außenkontur angepasster Form, angeordnet und bevorzugt in die Außenhaut der mobilen Arbeitsmaschine integriert werden. Dadurch ist es möglich, das äußere Erscheinungsbild der mobilen Arbeitsmaschine deutlicher hervorzuheben und die Wahrnehmbarkeit der mobilen Arbeitsmaschine zu erhöhen. Wegen der vernachlässigbaren Wärmeemission können die LED in eine Außenfläche der mobilen Arbeitsmaschine in der Außenkontur integriert werden. Da LED eine vielfach höhere Lebensdauer gegenüber Glühlampen haben, kann zum einen der Serviceaufwand verringert werden, da kein Auswechseln erfolgen muss, und zum anderen muss nicht zwingend die Erreichbarkeit der LED zum Tausch sichergestellt werden.

Die LED sind beim Betrieb der mobilen Arbeitsmaschine durchgehend eingeschaltet. Dabei werden die LED bei Inbetriebnahme der mobilen Arbeitsmaschine automatisch eingeschaltet. Durch die LED, die immer eingeschaltet und gut sichtbar sind, lässt sich die Erkennbarkeit der mobilen Arbeitsmaschine und somit die passive Sicherheit ohne nennenswerte Erhöhung des Energieverbrauchs deutlich erhöhen. Aufgrund des geringen Stromverbrauchs der LED hat dies nahezu keinen Einfluss auf den Gesamtenergieverbrauch der mobilen Arbeitsmaschine. Die erfindungsgemäße mobile Arbeitsmaschine ist ein batterie-elektrisch betriebenes Flurförderzeug.

Vorteilhaft sind die LED in Linien im Bereich der Außenkanten der mobilen Arbeitsmaschine angeordnet.

Durch die LED können Linien mit Leuchteinheiten an Außenkanten der mobilen Arbeitsmaschine angeordnet sein. Dadurch machen die LED die Umrisse der mobilen Arbeitsmaschine als Positionssicherheitsleuchten deutlich und die Sichtbarkeit der mobilen Arbeitsmaschine wird erhöht. Insbesondere gilt dies in Bereichen, in denen sich helle und dunkle Abschnitte abwechseln, folglich in Hallen, Lagern und in Bereichen von Toren beim Übergang von Außenbereichen in Innenbereiche. Insbesondere werden entsprechende Positionssicherheitsleuchten durch Zulassungsvorschriften wie die StVZO vorgeschrieben.

In günstiger Ausführungsform bilden Flächenbereiche mit LED zusätzlich eine Funktionsleuchte, wie ein Bremslicht, ein Fahrlicht, ein Rücklicht und/oder eine Blinkleuchte.

Wenn eine Mehrzahl von LED, die eine Positionssicherheitsleuchte bilden, zusätzlich eine Funktionsleuchte, wie eine Blinkleuchte, ein Rücklicht und/oder Bremslicht, oder ein Fahrlicht bildet, kann eine hohe Funktionssicherheit erreicht werden, da der Ausfall einzelner LED die Funktionsleuchte insgesamt nur unmerklich in ihrer Funktion beeinträchtigt. Durch unterschiedliche Helligkeiten mittels Zu- und Abschalten von LED oder mittels Stromregelung können z.B. die Funktionen eines Brems- und Rücklichtes durch eine Funktionsleuchte erfüllt werden. Auch kann eine Linie aus LED als Positionssicherheitsleuchte dienen und zugleich, z.B. in einem verbreiterten Bereich, in dem die LED in einer Fläche angeordnet sind, als Funktionsleuchte wie etwa als Bremslicht, evtl. zugleich Rücklicht und/oder Blinkleuchte oder als Fahrlicht.

Die Helligkeit in einem Flächenbereich oder einer Linie der Außenkontur kann durch selektives Zu- oder Abschalten von LED regelbar sein.

In günstiger Ausführungsform ist die Helligkeit der LED durch Versorgung mit unterschiedlich großen Stromwerten regelbar.

Die LED können in der Außenkontur oder einer Außenhaut der mobilen Arbeitsmaschine vertieft angeordnet sein.

Dadurch ist eine Beschädigung während des Betriebs der mobilen Arbeitsmaschine nahezu ausgeschlossen.

Vorteilhaft sind LED in weiteren Farben neben weiß, gelb und rot vorgesehen.

Um vorgegebenen Sicherheitsvorschriften, z.B. der StVZO, zu entsprechen, können z.B. in der Hauptfahrtrichtung vorne weiße LED als Positionssicherheitsleuchte in einer Linie oder einem Flächenbereich angeordnet werden, wobei diese LED zusätzlich einen Scheinwerfer eines Fahrtlichtes oder weiteren vorgeschriebenen zusätzlichen Positionssicherheitsleuchten bilden können, wenn die Scheinwerfer zu weit innen an der mobilen Arbeitsmaschine angeordnet sind und zusätzliche Positionssicherheitslichter erforderlich werden. Gleiches gilt in Bezug auf die Rückwärtsrichtung für rote LED als hintere Positionssicherheitsleuchte, die zusätzlich die Funktion eines Bremslichts und/oder eines Rücklichtes haben können. Auch können Blinkleuchten durch entsprechende flächige Bereiche mit gelb leuchtenden LED gebildet werden, die als Positionssicherheitsleuchte dienen. Soweit dann weitere Farben, wie etwa blau, als seitliche oder obere Positionssicherheitsleuchten vorgesehen werden, kann dadurch eine erhöhte Aufmerksamkeit erreicht werden.

Das batterie-elektrisch betriebene Flurförderzeug ist bevorzugt ein Gabelstapler.

Bei einem Gabelstapler können die LED am Heckgewicht außen, im Vorderaufbau vorne sowie im Rahmen und im Bereich der Fahrerschutzdachholme angeordnet und integriert sein.

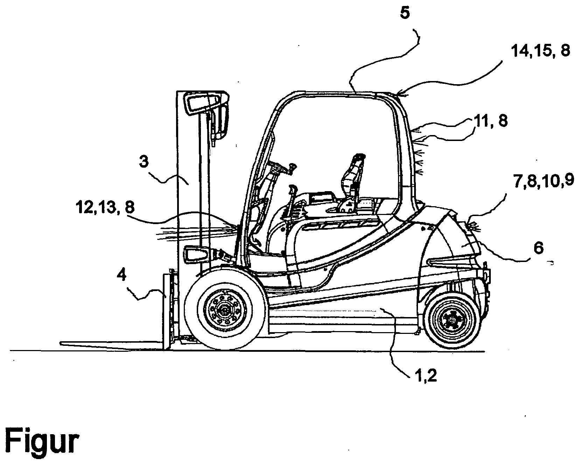

Weitere Vorteile und Einzelheiten der Erfindung werden anhand des in der Figur dargestellten Ausführungsbeispiels näher erläutert. Hierbei zeigt die Figur eine mobile Arbeitsmaschine in Form eines als Gabelstapler ausgebildeten Flurförderzeugs.

Die Figur zeigt eine mobile Arbeitsmaschine 1, die als Gabelstapler 2 ausgebildet ist. Der Gabelstapler 2 weist ein Hubgerüst 3 mit einer Lastgabel 4 sowie ein Fahrerschutzdach 5 auf. In einem als Gegengewicht dienenden Heckgewicht 6 ist ein Rücklicht und zugleich Bremslicht 7 als Funktionsleuchte 10 angeordnet, bestehend aus einer Mehrzahl von flächig in der Außenkontur angeordneten roten LED 9.

Die durch die Strahlkegel angedeuteten roten LED 9 oder einzelne der flächig angeordneten roten LED 9 bilden weiterhin eine hintere Positionssicherheitsleuchte 8. Die Helligkeit des Rück- und/oder Bremslichts 7 kann durch selektives Zu- und Abschalten von einzelnen roten LED 9 geregelt werden.

An der Außenkante des Fahrerschutzdaches 5 im Bereich der Fahrerschutzdachholme sind linienförmig weitere blaue LED 11 angeordnet, die seitliche Positionssicherheitsleuchten 8 bilden. Durch diese wird die Kontur des Gabelstaplers 2 bei schlechten Sichtverhältnissen besser erkennbar. Diese blauen LED 11 können in ihrer Helligkeit durch eine Regelung des Stromes verändert werden.

An der Vorderseite des Gabelstaplers 2, beispielsweise dem Vorderaufbau oder den Fahrerschutzdachholmen sind weitere weiße LED 12 als vordere Positionssicherheitsleuchten 8 angeordnet, die in einem flächigen Bereich durch weitere weiße LED zugleich als Funktionsleuchte in Form eines Fahrscheinwerfers eines Fahrtlichtes 13 dienen.

Seitlich oben sind im Bereich der Fahrerschutzdachholme gelbe LED 14 als obere Positionssicherheitsleuchten 8 angeordnet, die in einem flächigen Bereich durch weitere gelbe LED 14 zugleich als Funktionsleuchte in Form einer Blinkleuchte 15 dienen.

Die LED 9, 11, 12, 14 erreichen eine vielfach höhere Lebensdauer gegenüber Glühlampen. Dadurch wird der Serviceaufwand verringert, da kein Auswechseln erfolgen muss, und zum anderen können die blauen LED 11, die die seitliche obere Positionssicherheitsleuchte 8 bilden, so eingebaut werden, dass sie nicht zwingend erreichbar sind. Die blauen LED 11 machen die Umrisse der mobilen Arbeitsmaschine 1 als Positionssicherheitsleuchten 8 deutlich und die Sichtbarkeit der mobilen Arbeitsmaschine 1 wird erhöht. Vorteilhaft können die LED 9, 12, 14 neben der Funktion als Positionssicherheitsleuchte 8 zusätzlich eine Funktionsleuchte 10 bilden und als Funktionsleuchte 10 mehrere Funktionen übernehmen. Im Fall des kombinierten Brems- und/oder Rücklichts 7 sowie der hinteren Positionssicherheitsleuchte 8, die von den LED 9 gebildet werden, sogar insgesamt drei Funktionen. Selbst beim Ausfall einzelner LED 9, 11, 12, 14 ist die Gesamtfunktion als Positionssicherheitsleuchte 8 nicht gefährdet. Als Vorteil ist zu nennen, dass auch wenn die LED 9, 11, 12, 14 automatisch bei Inbetriebnahme des batterie-elektrisch betriebenen Gabelstaplers eingeschaltet werden, dies aufgrund des geringen Stromverbrauchs der 9, 11, 12, 14 nahezu keinen Einfluss Betriebsdauer mit einer Batterieladung hat.

Durch die mögliche Integration in die Außenhaut der Außenkontur des Gabelstaplers 2, wie etwa z. B. bei den roten LED 8, die ein Rück- und/oder Bremslicht 7 und die hintere Positionssicherheitsleuchte 8 bilden, durch eine Integration in das Gegengewicht 6 sowie der von den blauen LED 11 gebildeten seitlichen oberen Positionssicherheitsleuchte 8 oder der von den gelben LED 14 gebildeten oberen Positionssicherheitsleuchte 8, die zugleich als Blinkleuchte 15 dient, durch eine Integration in die Fahrerschutzdachholme, ist eine Beschädigung während des Betriebs des Gabelstaplers 2 nahezu ausgeschlossen.

## Patentansprüche

1. Mobile Arbeitsmaschine mit Beleuchtung durch Leuchteinheiten, insbesondere Positionssicherheitsleuchten (8), wobei die Leuchteinheiten LED (9, 11, 12, 14) sind und in einer Mehrzahl in Linien und/oder Flächenbereichen in die Außenkontur der mobilen Arbeitsmaschine (1) integriert sind, um Positionssicherheitsleuchten (8) zu bilden, **dadurch gekennzeichnet, dass** die mobile Arbeitsmaschine (1) ein batterie-elektrisch betriebenes Flurförderzeug ist und dass die LED (9, 11, 12, 14) beim Betrieb der mobilen Arbeitsmaschine (1) durchgehend eingeschaltet sind.

2. Mobile Arbeitsmaschine nach Anspruch 1,
**dadurch gekennzeichnet,**
**dass** die LED (9, 11, 12, 14) in Linien im Bereich von Außenkanten der mobilen Arbeitsmaschine (1) angeordnet sind.

3. Mobile Arbeitsmaschine nach Anspruch 1 oder 2,
**dadurch gekennzeichnet,**
**dass** die LED (9, 11, 12, 14) in Flächenbereichen im Bereich von Außenkanten der mobilen Arbeitsmaschine angeordnet sind.

4. Mobile Arbeitsmaschine nach Anspruch 2 oder 3,
**dadurch gekennzeichnet,**
**dass** Linien oder Flächenbereiche mit LED (9, 11, 12, 14) zusätzlich eine Funktionsleuchte (10), insbesondere ein Bremslicht und/oder ein Rücklicht (7) und/oder ein Fahrlicht (13) und/oder eine Blinkleuchte (15) bilden.

5. Mobile Arbeitsmaschine nach einem der Ansprüche 1 bis 4,
**dadurch gekennzeichnet,**
**dass** die Helligkeit in einem Flächenbereich oder einer Linie der Außenkontur durch selektives Zu- oder Abschalten von LED (9, 11, 12, 14) regelbar ist.

6. Mobile Arbeitsmaschine nach einem der Ansprüche 1 bis 5,
**dadurch gekennzeichnet,**
**dass** die Helligkeit der LED (9, 11, 12, 14) durch Versorgung mit unterschiedlich großen Stromwerten regelbar ist.

7. Mobile Arbeitsmaschine nach einem der Ansprüche 1 bis 6,
**dadurch gekennzeichnet,**
**dass** die LED (9, 11, 12, 14) in der Außenkontur vertieft angeordnet sind.

8. Mobile Arbeitsmaschine nach einem der Ansprüche 1 bis 7,
**dadurch gekennzeichnet,**
**dass** LED (9, 11, 12, 14) in weiteren Farben neben weiß, wie gelb, blau und/oder rot vorgesehen sind.

9. Mobile Arbeitsmaschine nach einem der Ansprüche 1 bis 8,
**dadurch gekennzeichnet,**
**dass** das batterie-elektrisch betriebene Flurförderzeug ein Gabelstapler (2) ist.

## Claims

1. Mobile work machine with lighting by means of lighting units, in particular position safety lights (8), wherein the lighting units are LEDs (9, 11, 12, 14), a plurality of which are integrated in lines and/or surface areas in the external contour of the mobile work machine (1) in order to form position safety lights (8), **characterized in that** the mobile work machine (1) is a battery-powered electric industrial truck and that the LEDs (9, 11, 12, 14) are continuously switched on by operating the mobile work machine (1).

2. Mobile work machine according to Claim 1,
**characterized**
**in that** the LEDs (9, 11, 12, 14) are arranged in lines in the region of outer edges of the mobile work machine (1).

3. Mobile work machine according to Claim 1 or 2,
**characterized**
**in that** the LEDs (9, 11, 12, 14) are arranged in surface areas in the region of outer edges of the mobile work machine.

4. Mobile work machine according to Claim 2 or 3,
**characterized**
**in that** lines or surface areas having LEDs (9, 11, 12, 14) additionally form a functional light (10), in particular a brake light and/or a rear light (7) and/or a headlight (13) and/or an indicator light (15).

5. Mobile work machine according to any of Claims 1 to 4,
**characterized**
**in that** the brightness is controllable in a surface area or a line of the external contour by selectively switching LEDs (9, 11, 12, 14) on or off.

6. Mobile work machine according to any of Claims 1 to 5,
**characterized**
**in that** the brightness of the LEDs (9, 11, 12, 14) is controllable by supplying different values of current.

7. Mobile work machine according to any of Claims 1 to 6,
**characterized**
**in that** the LEDs (9, 11, 12, 14) are arranged recessed in the external contour.

8. Mobile work machine according to any of Claims 1 to 7,
**characterized**
**in that** LEDs (9, 11, 12, 14) are provided in additional colours besides white, such as yellow, blue and/or red.

9. Mobile work machine according to any of Claims 1 to 8,
**characterized**
**in that** the battery-powered electric industrial truck is a forklift (2).

## Revendications

1. Machine de travail mobile comprenant un éclairage par des unités lumineuses, notamment des feux de sécurité de position (8), les unités lumineuses étant des LED (9, 11, 12, 14) et étant intégrées en une pluralité dans des lignes et/ou des zones de surface dans le contour extérieur de la machine de travail mobile (1) en vue de former des feux de sécurité de position (8), **caractérisée en ce que** la machine de travail mobile (1) est un chariot de manutention fonctionnant à l'électricité sur batterie et **en ce que** les LED (9, 11, 12, 14) sont continuellement allumées lors du fonctionnement de la machine de travail mobile (1).

2. Machine de travail mobile selon la revendication 1, **caractérisée en ce que** les LED (9, 11, 12, 14) sont disposées dans la zone des arêtes extérieures de la machine de travail mobile (1).

3. Machine de travail mobile selon la revendication 1 ou 2, **caractérisée en ce que** les LED (9, 11, 12, 14) sont disposées dans des zones de surface dans la zone des arêtes extérieures de la machine de travail mobile.

4. Machine de travail mobile selon la revendication 2 ou 3, **caractérisée en ce que** les lignes ou les zones de surface pourvues de LED (9, 11, 12, 14) forment en plus un feu fonctionnel (10), notamment un feu stop et/ou un phare de recul (7) et/ou un feu de croisement (13) et/ou un feu clignotant (15).

5. Machine de travail mobile selon l'une des revendications 1 à 4, **caractérisée en ce que** la luminosité dans une zone de surface ou une ligne du contour extérieur peut être régulée par mise en circuit ou hors circuit sélective de LED (9, 11, 12, 14).

6. Machine de travail mobile selon l'une des revendications 1 à 5, **caractérisée en ce que** la luminosité des LED (9, 11, 12, 14) peut être régulée par l'alimentation avec des valeurs de courant d'intensités différentes.

7. Machine de travail mobile selon l'une des revendications 1 à 6, **caractérisée en ce que** les LED (9, 11, 12, 14) sont disposées en retrait dans le contour extérieur.

8. Machine de travail mobile selon l'une des revendications 1 à 7, **caractérisée en ce que** les LED (9, 11, 12, 14) sont présentes dans des couleurs supplémentaires en plus du blanc, comme le jaune, le bleu et/ou le rouge.

9. Machine de travail mobile selon l'une des revendications 1 à 8, **caractérisée en ce que** le chariot de manutention fonctionnant à l'électricité sur batterie est un gerbeur à fourche (2).
